Europäisches Patentamt

European Patent Office

Office européen des brevets

(11) Numéro de publication : **0 109 883**
**B1**

# (12) FASCICULE DE BREVET EUROPÉEN

(45) Date de publication du fascicule du brevet :
22.01.86

(21) Numéro de dépôt : **83402137.0**

(22) Date de dépôt : **03.11.83**

(51) Int. Cl.⁴ : **F 16 K 37/00**

(54) Installation pour le contrôle de la pression de réglage d'une soupape de sécurité.

(30) Priorité : **10.11.82 FR 8218880**

(43) Date de publication de la demande :
**30.05.84 Bulletin 84/22**

(45) Mention de la délivrance du brevet :
**22.01.86 Bulletin 86/04**

(84) Etats contractants désignés :
**BE DE GB IT SE**

(56) Documents cités :
**EP-A- 0 017 365**
**GB-A- 1 315 446**
**GB-A- 2 062 812**
**US-A- 2 178 901**
**US-A- 3 768 299**

(73) Titulaire : **ELECTRICITE DE FRANCE Service National**
**2, rue Louis Murat**
**F-75008 Paris (FR)**

(72) Inventeur : **Chabat-Courrede, Jean**
**31 rue du Docteur Emile Bergeron**
**F-77250 Moret S/Loing (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

## Description

La présente invention concerne une installation pour le contrôle de la pression de réglage d'une soupape de sécurité (p. e. GB-A-2 062 812).

De telles soupapes sont destinées à s'ouvrir lorsque la pression régnant dans leur tubulure d'amenée de fluide (ce fluide sous pression est généralement de l'air ou de la vapeur) devient supérieure à une valeur prédéterminée, dite pression de réglage.

Les opérations de tarage de la soupape et de contrôle de la valeur de cette pression de réglage ne sont généralement pas effectuées directement sur l'installation qui utilise la soupape, mais sur un banc de contrôle.

Une première difficulté vient de ce que les conditions de tarage sur banc ne sont pas les mêmes que les conditions réelles de fonctionnement, par exemple la contre-pression en aval de la soupape et la température. Ceci nécessite d'opérer des corrections par rapport au réglage effectué sur banc.

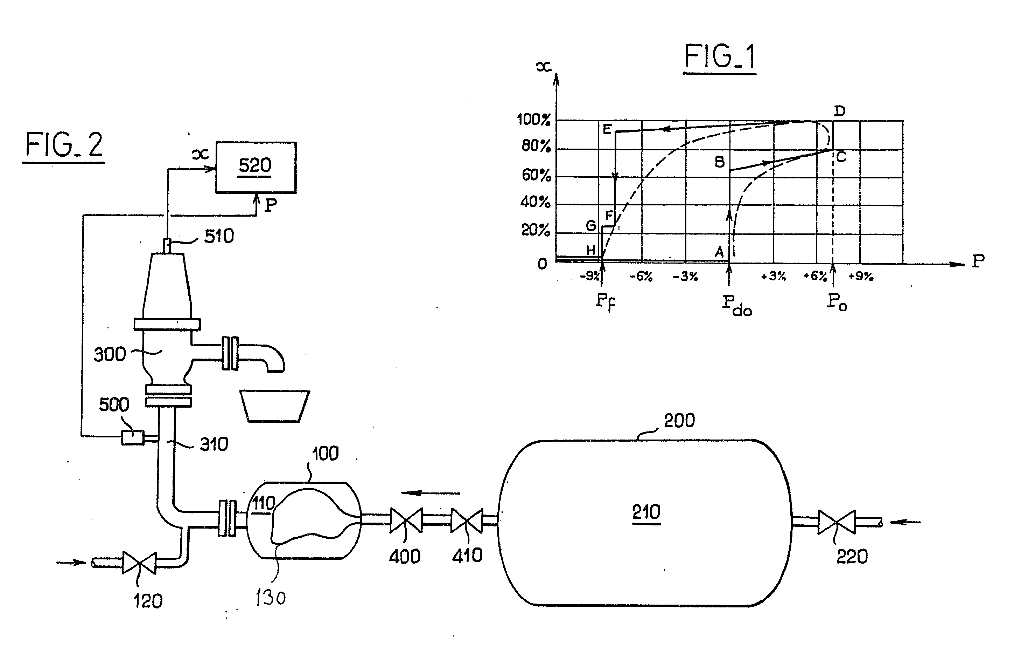

On constate que le déclenchement de la soupape, c'est-à-dire la levée de son clapet, n'a pas lieu de façon complète et immédiate. La figure 1 annexée montre, pour une soupape fonctionnant dans une installation industrielle, la variation de la course x du clapet en fonction de la pression P, la ligne en trait plein étant une courbe théorique, et la courbe réelle étant figurée en tiretés.

La partie ABCD correspond à l'ouverture de la soupape, pour une pression croissante : pour une valeur $p_{do}$ donnée, appelée, « pression de début d'ouverture », on constate une levée franche du clapet (ligne AB), correspondant à un décollement du clapet de son siège et à un équilibre entre l'effort exercé par la pression de début d'ouverture et les forces appliquées par le ressort de tarage. Pour arriver à l'ouverture complète (point D), il faudrait augmenter la pression jusqu'à la valeur $P_O$, dite pression d'ouverture.

A la fermeture (partie DEFGH de la courbe), pour une pression décroissante, il faudra descendre jusqu'à la valeur $P_f$ dite pression de fermeture.

Le paramètre significatif du fonctionnement de la soupape, et qu'il est essentiel de mesurer avec précision, est la pression de début d'ouverture qui correspond à une levée sensible du clapet.

Une première méthode de tarage au banc actuellement proposée consiste à augmenter progressivement la pression d'air en amont de la soupape et à attendre le claquement correspondant au début d'ouverture : on note alors la pression correspondante. Cette méthode a cependant l'inconvénient de nécessiter une modification de la géométrie de l'écoulement en aval du clapet pour tenir compte des différences avec les conditions réelles de fonctionnement : en effet, il faut permettre la levée du clapet même avec un faible débit de fluide (celui permis par l'installation du banc) ; ceci est obtenu en modifiant la géométrie de l'écoulement de fluide en aval du clapet, par exemple en modifiant la position d'une bague vissée sur la partie appelée « buse » formant siège du clapet. On obtient ainsi une force maximale de relevage dans des conditions pratiquement statiques (très faible débit).

En outre, un gradient suffisant de montée en pression est nécessaire pour compenser les fuites juste avant le début d'ouverture, lorsque l'air commence à fuser.

Dans une seconde méthode également proposée actuellement, qui ne nécessite pas cette modification de la géométrie de l'écoulement du fluide dans la soupape, le fluide est de l'eau, et l'ouverture de la soupape est détectée visuellement. Un risque de confusion existe cependant entre la plage d'inétanchéité (suintement de la soupape) et le véritable début d'ouverture de la soupape : l'examen visuel est à cet égard moins précis que la perception du claquement dans la méthode précédente. En outre, le gradient de montée en pression étant mal défini, des battements risquent d'apparaître, entraînant une détérioration de la soupape.

Pour remédier aux inconvénients de l'une et l'autre de ces méthodes connues, l'invention propose une installation permettant de recréer sur banc les conditions réelles de débit instantané en service avec un gradient de pression important.

Cette installation comporte : un premier réservoir, rempli d'un premier fluide porté à une pression inférieure à la pression de réglage, relié à la tubulure d'amenée du fluide à la soupape ; un second réservoir, rempli d'un second fluide porté à une pression supérieure à la pression de réglage ; des moyens de mise en communication rapide des deux réservoirs ; ainsi que des moyens de mesure simultanée de la pression régnant dans la tubulure d'amenée de fluide de la soupape et du déplacement du clapet de celle-ci.

De préférence, il est prévu des moyens d'isolement du premier fluide d'avec le second fluide, par exemple une membrane déformable disposée à l'intérieur du premier réservoir.

D'autres caractéristiques et avantages de l'invention apparaîtront à la lecture de la description détaillée ci-dessous d'un mode de réalisation, en référence aux figures annexées sur lesquelles, outre la figure 1 déjà mentionnée :

la figure 2 est une vue schématique de l'installation selon l'invention.

Sur cette figure, la référence 100 désigne le premier réservoir, rempli d'un fluide sous pression 110, et communiquant avec la tubulure d'admission de fluide 310 de la soupape de sécurité 300.

Le fluide 110, que l'on désignera par « fluide poussé » peut être de l'eau, qui a l'avantage d'être incompressible, ou un gaz tel que l'air. L'emploi d'un gaz est préféré, dans la mesure où il ne produit pas de battement au moment de la mesure et ne peut engendrer aucun effet destructeur de la soupape.

Le remplissage du réservoir 100 en fluide poussé est réalisé par l'intermédiaire de la vanne 120, à une pression comprise entre 80 % et 95 % de la pression de réglage de la soupape, de préférence 90 % de cette valeur.

Le second réservoir 200 contient un « fluide pousseur » 210. Le volume de ce réservoir est supérieur à celui du réservoir 100, de préférence entre deux et six fois supérieur.

Le fluide pousseur est généralement un gaz, par exemple de l'air comprimé introduit dans le réservoir 200 par la vanne 220, à une pression supérieure à celle régnant dans le réservoir 100 de fluide poussé, et également supérieure à la pression de réglage de la soupape. La pression du fluide pousseur est comprise avantageusement entre 110 % et 140 % de la pression de réglage, de préférence 120 à 130 %.

Les deux réservoirs sont isolés par une vanne 410 de sectionnement à ouverture rapide. On prévoit également, de préférence, une vanne de réglage 40 permettant d'ajuster le débit de fluide pousseur alimentant le réservoir 100.

De préférence, une membrane souple 130, placée à l'intérieur du premier réservoir 100, isole le fluide pousseur du fluide poussé. Ceci permet d'assurer que le volume de fluide que l'on fera passer à travers la soupape restera inférieur à une valeur prédéterminée.

Les moyens de mesure comportent un capteur 500 de la pression instantanée régnant dans la tubulure 310 d'admission de fluide et un capteur 510 de déplacement du clapet. Ces deux capteurs sont reliés à un circuit 520 assurant la mesure et l'enregistrement simultané de ces deux valeurs. On utilisera de préférence un enregistreur à faible inertie tel qu'un enregistreur galvanométrique à miroir, de préférence à un système à plumes.

La mesure est réalisée en ouvrant la vanne à sectionnement rapide 410 : le fluide pousseur emplit alors brusquement la membrane 310, provoquant dans le fluide poussé un gradient de pression important. La mesure est ainsi réalisée en un temps très bref (moins de 1 seconde) avec un débit volumique important correspondant aux conditions normales de service, qui permet une levée significative du clapet.

Le dépouillement des résultats de mesures de l'ouverture en fonction de la pression permettra de déterminer avec exactitude la pression de début d'ouverture recherchée ; éventuellement la levée correspondante du clapet pourra être déterminée.

## Revendications

1. Installation pour le contrôle de la pression de réglage d'une soupape de sécurité (300), comportant des moyens (500, 510, 520) de mesure simultanée de la pression régnant dans la tubulure d'amenée de fluide et du déplacement du clapet de la soupape, caractérisée en ce qu'elle comporte :

un premier réservoir (100), rempli d'un premier fluide (110) porté à une pression inférieure à la pression de réglage, relié à la tubulure (310) d'amenée de fluide à la soupape,

un second réservoir (200), rempli d'un second fluide (210) porté à une pression supérieure à la pression de réglage, ainsi que

des moyens (410) de mise en communication rapide des deux réservoirs.

2. Installation selon la revendication 1, caractérisée en ce qu'elle comporte des moyens (130) d'isolement du premier fluide d'avec le second fluide.

3. Installation selon la revendication 2, caractérisée en ce que les moyens d'isolement comprennent une membrane déformable disposée à l'intérieur du premier réservoir.

4. Installation selon l'une des revendications 1 à 3, caractérisée en ce que le volume du second réservoir vaut entre 2 et 6 fois celui du premier réservoir.

5. Installation selon l'une des revendications 1 à 4, caractérisée en ce que la pression régnant dans le premier réservoir est comprise entre 80 % et 95 % de la pression de réglage de la soupape.

6. Installation selon l'une des revendications 1 à 5, caractérisée en ce que la pression régnant dans le second réservoir est comprise entre 110 % et 140 % de la pression de réglage de la soupape.

7. Installation selon l'une des revendications 1 à 6, caractérisée en ce qu'il est prévu, en série avec les moyens de mise en communication rapide, un robinet (400) de réglage de débit.

## Claims

1. Apparatus for checking the set pressure of a safety valve (300), characterized in that it comprises :

a first tank (100) filled with a first fluid (110) at a pressure less than the set pressure, and connected to the fluid inlet tubing (310) of the valve ;

a second tank (200) filled with a second fluid (210) at a pressure greater than the set pressure ;

means (410) for rapidly putting the two tanks into communication with each other ; and

means (500, 510, 520) for simultaneously measuring the pressure in the fluid inlet tubing and the displacement of the valve plate.

2. Apparatus according to claim 1, characterized in that it comprises means (130) for isolating the first fluid from the second fluid.

3. Apparatus according to claim 2, characterized in that the means for isolating comprise a deformable membrane disposed inside the first tank.

4. Apparatus according to any one of claims 1 to 3, chaacterized in that the volume of the second tank is between 2 to 6 times the volume of the first tank.

5. Apparatus according to any one of claims 1 to 4, characterized in that the pressure inside the first tank lies between 80 % and 95 % of the set pressure of the valve.

6. Apparatus according to any one of claims 1 to 5, characterized in that the pressure inside the second tank lies between 110 % and 140 % of the set pressure of the valve.

7. Apparatus according to any one of claims 1 to 6, characterized in that a flow rate controlling cock (400) is provided in series with the rapid communication means.

## Patentansprüche

1. Vorrichtung zur Kontrolle des Regeldrucks eines Sicherheitventils (300), enthaltend Einrichtungen (500, 510, 520) zum gleichzeitigen Messen des in der Fluidzuführung herrschenden Drucks und der Verstellung des Klappe des Ventils, dadurch gekennzeichnet, daß sie enthält :

einen ersten Behälter (100), der mit einem ersten Fluid (110) gefüllt ist, das einen Druck aufweist, der unter dem Regeldruck liegt und der mit der zum Ventil führenden Fluidzuleitung (310) verbunden ist,

einen zweiten Behälter (200), der mit einem zweiten Fluid (210) gefüllt ist, das einen Druck aufweist, der über dem Regeldruck liegt, sowie

Einrichtungen (410) zur schnellen Verbindung der zwei Behälter.

2. Vorrichtung nach Anspruch 1, dadurch gekennzeichnet, daß sie Einrichtungen (130) zur Trennung des ersten Fluids von dem zweiten Fluid aufweist.

3. Vorrichtung nach Anspruch 2, dadurch gekennzeichnet, daß die Trenneinrichtungen eine verformbare Membran enthalten, die im Inneren des ersten Behälters angeordnet ist.

4. Vorrichtung nach einem der Ansprüche 1 bis 3, dadurch gekennzeichnet, daß das Volumen des zweiten Behälters zwischen zwei- und sechsmal so groß wie das des ersten Behälters ist.

5. Vorrichtung nach einem der Ansprüche 1 bis 4, dadurch gekennzeichnet, daß der im ersten Behälter herrschende Druck zwischen 80 % und 95 % des Regeldrucks des Ventils liegt.

6. Vorrichtung nach einem der Ansprüche 1 bis 5, dadurch gekennzeichnet, daß der im zweiten Behälter herrschende Druck zwischen 110 % und 140 % des Regeldrucks des Ventils liegt.

7. Vorrichtung nach einem der Ansprüche 1 bis 6, dadurch gekennzeichnet, daß in Reihe mit den Schnellverbindungseinrichtungen ein Durchfluß-regelschieber (400) angeordnet ist.

FIG_1

FIG_2